(19) Europäisches Patentamt
European Patent Office
Office européen des brevets

(11) **EP 4 345 425 B1**

(12) **FASCICULE DE BREVET EUROPÉEN**

(45) Date de publication et mention
de la délivrance du brevet:
**29.01.2025 Bulletin 2025/05**

(21) Numéro de dépôt: **23198444.4**

(22) Date de dépôt: **20.09.2023**

(51) Classification Internationale des Brevets (IPC):
**G01F 15/075** (2006.01)     **E03B 7/07** (2006.01)
**G01F 15/063** (2022.01)     **G01F 15/00** (2006.01)

(52) Classification Coopérative des Brevets (CPC):
**G01F 15/0755; E03B 7/075; G01F 15/005;
G01F 15/063**

(54) **SURVEILLANCE ET OPTIMISATION DE LA CONSOMMATION D'EAU**

ÜBERWACHUNG UND OPTIMIERUNG DES WASSERVERBRAUCHS

WATER CONSUMPTION MONITORING AND OPTIMIZATION

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **29.09.2022 FR 2209901**

(43) Date de publication de la demande:
**03.04.2024 Bulletin 2024/14**

(73) Titulaire: **Sagemcom Energy & Telecom SAS
92270 Bois-Colombes (FR)**

(72) Inventeur: **TEBOULLE, Henri
92500 RUEIL MALMAISON (FR)**

(74) Mandataire: **Cabinet Boettcher et al
5, rue de Vienne
75008 Paris (FR)**

(56) Documents cités:
**WO-A1-2021/260573      US-A1- 2016 041 565
US-A1- 2020 011 721      US-A1- 2021 293 004
US-B2- 11 256 272**

**Description**

L'invention concerne le domaine des compteurs d'eau dits « intelligents ».

ARRIERE PLAN DE L'INVENTION

Un compteur d'eau comporte très classiquement un conduit interne dans lequel circule l'eau fournie à une installation par un réseau de distribution, et un dispositif de mesure qui mesure la consommation d'eau de ladite installation.

Le dispositif de mesure est par exemple un dispositif de mesure ultrasonique comprenant un transducteur amont (côté réseau) et un transducteur aval (côté installation). Chaque transducteur joue successivement le rôle d'un émetteur et d'un récepteur de signaux ultrasonores. Le transducteur amont émet ainsi un signal ultrasonore dans le conduit interne, qui est reçu par le transducteur aval après avoir parcouru dans l'eau un chemin prédéfini (de longueur parfaitement maîtrisée). Puis, le transducteur aval émet à son tour un signal ultrasonore, qui est reçu par le transducteur amont après avoir parcouru dans l'eau le chemin prédéfini (dans l'autre sens). Le dispositif de mesure ultrasonique évalue alors le débit d'eau à partir des temps de vol des signaux ultrasonores entre les transducteurs. L'estimation du débit d'eau permet d'évaluer et de facturer le volume d'eau consommé.

Certains compteurs d'eau modernes, dits « intelligents », doivent être capables de limiter, réguler, voire même de couper le débit d'eau.

Dans certains pays, lorsque l'utilisateur final (c'est-à-dire l'abonné) ne paye pas ses factures d'eau, le distributeur peut limiter le débit d'eau fourni mais doit assurer à l'utilisateur « mauvais payeur » un débit minimal. Dans d'autres pays, le débit minimal est assuré pendant un certain nombre de jours seulement, puis l'accès à l'eau est coupé.

La régulation du débit est classiquement réalisée via une vanne motorisée qui est intégrée dans un boîtier de coupure situé à proximité du compteur, voire même qui est intégrée dans le compteur.

On envisage d'utiliser ces compteurs d'eau intelligents pour aider les utilisateurs à contrôler et à optimiser leur consommation d'eau. Une telle fonctionnalité présente un intérêt indéniable en matière d'écologie, mais est aussi très avantageuse pour le pouvoir d'achat de l'utilisateur.

Le document US2020/011721 A1 présente un compteur d'eau comprenant un dispositif de mesure agencé pour produire des mesures d'une consommation d'eau d'une installation

Le document US2016/041565 A1 présente un compteur d'eau comprenant un dispositif de mesure agencé pour produire des mesures d'une consommation d'eau d'une installation avec plusieurs systèmes.

OBJET DE L'INVENTION

L'invention a pour objet de contrôler et d'optimiser la consommation d'eau d'une installation afin, notamment, de réduire la facture d'eau.

RESUME DE L'INVENTION

En vue de la réalisation de ce but, on propose un compteur d'eau comprenant :

- un dispositif de mesure agencé pour produire des mesures d'une consommation d'eau d'une installation ;
- une vanne, ou des premiers moyens de communication avec un boîtier de coupure situé à l'extérieur du compteur et intégrant une vanne ;
- une unité de traitement agencée pour :

  ◦ analyser les mesures de la consommation d'eau pour produire des mesures de paramètres prédéfinis relatifs à la consommation d'eau, et détecter, à partir desdites mesures des paramètres prédéfinis, des phases de fonctionnement d'au moins un système prédéterminé de l'installation ;
  ◦ pour chaque système prédéterminé, au cours de chaque phase de fonctionnement dudit système prédéterminé, si la consommation d'eau dépasse un seuil prédéterminé associé audit système prédéterminé, fermer au moins partiellement la vanne pendant une durée prédéterminée pour limiter un débit d'eau courant fourni à l'installation.

Le compteur d'eau détecte donc dans les mesures de la consommation d'eau des signatures représentatives chacune du fonctionnement d'un système prédéterminé (par exemple une douche, un bain), puis limite le débit d'eau courant lorsque la consommation d'eau par un même système dépasse un seuil prédéterminé. Le débit d'eau courant est donc réduit uniquement dans des cas d'utilisation spécifiques, dans le but non pas de pénaliser l'utilisateur, mais plutôt de l'avertir d'une surconsommation et de l'aider à optimiser sa consommation d'eau.

On propose de plus un compteur d'eau tel que précédemment décrit, dans lequel les paramètres prédéfinis comprennent une durée de tirage d'eau et/ou un débit d'eau moyen et/ou un volume d'eau consommé.

On propose de plus un compteur d'eau tel que précédemment décrit, dans lequel la fermeture au moins partielle de la vanne consiste à fermer la vanne d'un niveau de fermeture prédéterminé qui est fonction d'un seuil paramétrable, le compteur d'eau comprenant des deuxièmes moyens de communication permettant de paramétrer le seuil paramétrable.

On propose de plus un compteur d'eau tel que précédemment décrit, dans lequel les au moins un système prédéterminé comprennent une douche et un bain.

On propose de plus un compteur d'eau tel que précédemment décrit, dans lequel la vanne est une vanne à bille.

On propose de plus un procédé de surveillance, mis en œuvre dans l'unité de traitement d'un compteur d'eau tel que précédemment décrit, et comprenant les étapes de :

- analyser les mesures de la consommation d'eau pour produire des mesures de paramètres prédéfinis relatifs à la consommation d'eau, et détecter, à partir desdites mesures des paramètres prédéfinis, des phases de fonctionnement d'au moins un système prédéterminé de l'installation ;
- pour chaque système prédéterminé, au cours de chaque phase de fonctionnement dudit système prédéterminé, si la consommation d'eau dépasse un seuil prédéterminé associé audit système prédéterminé, fermer au moins partiellement la vanne pendant une durée prédéterminée pour limiter un débit d'eau courant fourni à l'installation.

On propose de plus un procédé de surveillance tel que précédemment décrit, dans lequel les paramètres prédéfinis comprennent une durée de tirage d'eau et/ou un débit d'eau moyen et/ou un volume d'eau consommé.

On propose de plus un procédé de surveillance tel que précédemment décrit, comprenant les étapes de :

- détecter un début d'un tirage d'eau ;
- démarrer un chronomètre ;
- si le tirage d'eau est toujours en cours alors qu'une durée mesurée par le chronomètre est supérieure à un premier seuil temporel :

  ◦ évaluer un premier débit d'eau moyen et un premier volume d'eau consommé pendant le premier seuil temporel ;
  ◦ effectuer une première étape de détection consistant à vérifier si le premier débit d'eau moyen appartient à un premier intervalle de débit prédéterminé et si le premier volume d'eau consommé est supérieur à un premier seuil de volume prédéterminé et, si ces conditions sont toutes deux remplies, détecter une phase de fonctionnement et une surconsommation à venir d'un premier système prédéterminé, puis fermer au moins partiellement la vanne pendant la période prédéterminée.

On propose de plus un procédé de surveillance tel que précédemment décrit, le premier système prédéterminé étant une douche.

On propose de plus un procédé de surveillance tel que précédemment décrit, dans lequel, si les conditions de la première étape de détection ne sont pas toutes remplies, le procédé comprend les étapes de :

- vérifier si le tirage d'eau est toujours en cours alors qu'une durée mesurée par le chronomètre est supérieure à un deuxième seuil temporel ;
- si c'est le cas :

  ◦ évaluer un deuxième débit d'eau moyen et/ou un deuxième volume d'eau consommé pendant le deuxième seuil temporel ;
  ◦ effectuer une deuxième étape de détection consistant à vérifier si le deuxième débit d'eau moyen appartient à un deuxième intervalle de débit prédéterminé et/ou si le deuxième volume d'eau consommé est supérieur à un deuxième seuil de volume prédéterminé supérieur au premier seuil de volume prédéterminé et, si cette ou ces conditions sont toutes remplies, détecter une phase de fonctionnement et une surconsommation à venir d'un deuxième système prédéterminé, puis fermer au moins partiellement la vanne pendant la période prédéterminée.

On propose de plus un procédé de surveillance tel que précédemment décrit, le deuxième système prédéterminé étant un bain.

On propose de plus un procédé de surveillance tel que précédemment décrit, dans lequel la fermeture au moins partielle de la vanne consiste à fermer la vanne d'un niveau de fermeture prédéterminé, le procédé de surveillance comprenant en outre l'étape, suite à la durée prédéterminée pendant laquelle la vanne est au moins partiellement fermée, de vérifier si le tirage d'eau est toujours en cours et, si c'est le cas, d'augmenter le niveau de fermeture prédéterminé d'une valeur prédéterminée.

On propose de plus un procédé de surveillance tel que précédemment décrit, dans lequel le niveau de fermeture prédéterminé est réinitialisé à la fin de chaque journée.

On propose de plus un procédé de surveillance tel que précédemment décrit, comprenant en outre l'étape, suite à la durée prédéterminée pendant laquelle la vanne est au moins partiellement fermée, de vérifier si le tirage d'eau est toujours en cours et, si c'est le cas, de maintenir la vanne fermée pendant une durée supplémentaire supérieure à la durée prédéterminée.

On propose de plus un programme d'ordinateur comprenant des instructions qui conduisent l'unité de traitement du compteur tel que précédemment décrit à exécuter les étapes du procédé de surveillance tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit de modes de mise en œuvre particuliers non limitatifs de l'invention.

BREVE DESCRIPTION DES DESSINS

Il sera fait référence aux dessins annexés parmi lesquels :

[Fig. 1] la figure 1 représente un compteur d'eau selon un premier mode de réalisation ;
[Fig. 2] la figure 2 représente des étapes d'un procédé de surveillance ;
[Fig. 3] la figure 3 représente un compteur d'eau selon un deuxième mode de réalisation.

DESCRIPTION DETAILLEE DE L'INVENTION

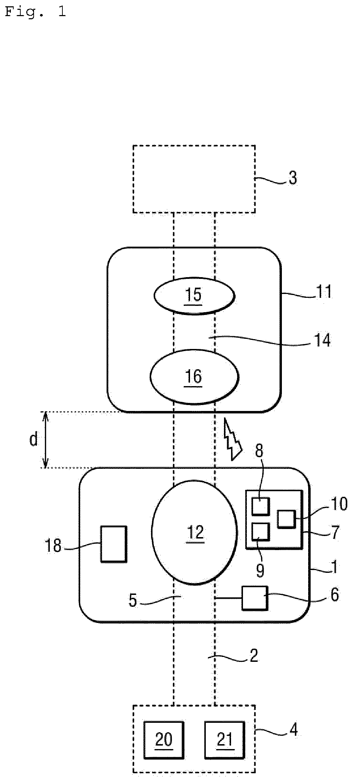

En référence à la figure 1, l'invention est ici mise en œuvre dans un compteur d'eau 1.

Le compteur d'eau 1 est monté sur un conduit principal 2 qui permet de relier un réseau de distribution d'eau 3 à une installation 4.

Le compteur 1 intègre un premier conduit interne 5 qui s'étend dans la continuité du conduit principal 2, de sorte que l'eau consommée par l'installation 4 passe dans le premier conduit interne 5.

Le compteur 1 intègre de plus un dispositif de mesure 6, qui est ici un dispositif de mesure ultrasonique et qui fonctionne comme le dispositif décrit plus tôt.

Le compteur 1 comporte de plus une unité de traitement 7. L'unité de traitement 7 comprend au moins un composant de traitement 8, qui est par exemple un processeur « généraliste », un processeur spécialisé dans le traitement du signal (ou DSP, pour *Digital Signal Processor*), un microcontrôleur, ou bien un circuit logique programmable tel qu'un FPGA (pour *Field Programmable Gate Arrays*) ou un ASIC (pour *Application Specific Integrated Circuit*). L'unité de traitement 7 comprend aussi une ou des mémoires 9, reliées à ou intégrées dans le composant de traitement 8. Au moins l'une de ces mémoires 9 forme un support d'enregistrement lisible par ordinateur, sur lequel est enregistré au moins un programme d'ordinateur comprenant des instructions qui conduisent le composant de traitement 8 à exécuter au moins certaines des étapes du procédé de surveillance qui sera décrit plus bas.

L'unité de traitement 7 comprend une horloge 10 de type RTC (pour *Real Time Clock,* que l'on peut traduire par « horloge temps réel ») lui permettant d'intégrer un calendrier. Une resynchronisation périodique de l'horloge 10 est réalisée régulièrement via un réseau de communication. L'horloge 10 permet de mettre en œuvre un chronomètre.

Le compteur 1 comporte de plus des premiers moyens de communication qui lui permettent de communiquer avec un boîtier de coupure 11 situé à l'extérieur du compteur 1. La distance d entre le compteur 1 et le boîtier de coupure 11 est typiquement comprise entre 1cm et 20cm.

Les premiers moyens de communication comprennent une première interface NFC 12 (pour *Near Field Communication,* que l'on peut traduire par « communication en champ proche »). Il s'agit d'une interface NFC « maître ».

Le boîtier de coupure 11 comprend un deuxième conduit interne 14, une vanne 15 et une deuxième interface NFC 16 (interface NFC « esclave »).

Le deuxième conduit interne 14 s'étend lui aussi dans la continuité du conduit principal 2 (et donc du premier conduit interne 5 du compteur 1).

La vanne 15 est une vanne multi-positions motorisée (électromécanique). La vanne 15 comprend un organe mobile qui s'étend dans le deuxième conduit interne 14 et dont une position courante peut être commandée pour contrôler le débit courant de l'eau. Ici, la vanne 15 est une vanne à bille et l'organe mobile est donc une bille ; la position courante de la bille est une position angulaire.

Le compteur 1 et le boîtier de coupure 11 communiquent via la première interface NFC 12 et la deuxième interface NFC 16. Le compteur 1 peut ainsi piloter la vanne 15 pour contrôler le débit d'eau fourni à l'installation.

On décrit maintenant le procédé de surveillance qui est mis en œuvre dans l'unité de traitement 7 du compteur 1.

Le procédé de surveillance a pour but de détecter l'utilisation d'un système prédéterminé de l'installation 4 (parmi un ou plusieurs systèmes prédéterminés), et de limiter le débit d'eau fourni à l'installation 4 lorsque la consommation d'eau par le système devient trop importante.

Par « mesure de la consommation d'eau », on entend toute mesure représentative de la consommation d'eau : index, mesure de débit, mesure de volume, etc.

Le procédé de surveillance est ici mis en œuvre à l'initiative de l'utilisateur (mais il pourrait être mis en œuvre systématiquement, ou bien à l'initiative du distributeur d'eau ou du gestionnaire du réseau).

La détection des phases de fonctionnement de ces systèmes prédéterminés consiste à détecter dans les mesures de la consommation d'eau des signatures représentatives chacune de l'utilisation d'un système prédéterminé particulier.

Chaque signature correspond à des valeurs particulières de paramètres prédéfinis relatifs à la consommation d'eau.

L'unité de traitement 7 analyse donc les mesures de la consommation d'eau pour produire des mesures de paramètres prédéfinis relatifs à la consommation d'eau, et détecte, à partir desdites mesures des paramètres prédéfinis, des phases de fonctionnement d'au moins un système prédéterminé de l'installation. Par « phase de fonctionnement », on entend une période au cours de laquelle le système prédéterminé fonctionne et tire de l'eau de manière continue.

Les paramètres prédéfinis, permettant de détecter la signature d'un système prédéterminé, comprennent par exemple une durée de tirage d'eau et/ou un débit d'eau moyen et/ou un volume d'eau consommé.

Puis, pour chaque système prédéterminé, au cours de chaque phase de fonctionnement dudit système prédéterminé, si la consommation d'eau dépasse un seuil prédéterminé associé audit système prédéterminé, l'unité de traitement 7 commande la vanne 15 et la ferme partiellement pour limiter le débit d'eau courant fourni à l'installation 4.

La limitation du débit d'eau courant consiste donc à modifier la position angulaire de la bille de la vanne 15 pour fermer au moins partiellement la vanne 15.

La fermeture au moins partielle de la vanne 15 consiste à fermer la vanne d'un niveau de fermeture prédéterminé.

Le niveau de fermeture prédéterminé est fonction d'un seuil paramétrable X0.

Dans ce cas, le compteur d'eau 1 comprend des deuxièmes moyens de communication 18 permettant de paramétrer le seuil paramétrable.

Les deuxièmes moyens de communication 18 peuvent être de différents types.

Le seuil peut être paramétrable par l'utilisateur de l'installation. Dans ce cas, les deuxièmes moyens de communication 18 peuvent être des moyens radioélectriques (NFC, Wi-Fi, Bluetooth, etc.), voire même filaires. Il peut aussi s'agir d'une interface utilisant un ou des boutons et un écran positionné sur le compteur 1. Bien sûr, dans ce cas, le seuil peut aussi être paramétré par un opérateur du distributeur d'eau (ou du gestionnaire du réseau) présent sur place.

Le seuil paramétrable peut aussi être paramétrable à distance par le distributeur d'eau (ou par le gestionnaire du réseau) ; dans ce cas, les deuxièmes moyens de communication 18 sont par exemple des moyens de communication cellulaires.

On s'intéresse à un mode de réalisation particulier, dans lequel les systèmes prédéterminés comprennent une douche 20 et un bain 21.

Le type de consommation d'eau (douche 20 ou bain 21) est reconnu par une signature qui est elle-même définie par les paramètres prédéfinis suivants : durée de tirage d'eau, débit d'eau moyen et volume d'eau consommé.

Le débit d'eau moyen appartient ainsi typiquement à une plage de débit différente (en L/minute) lorsque de l'eau est tirée, selon que le système qui tire l'eau est une douche 20 ou un bain 21. De même, la durée de tirage d'eau est typiquement inférieure à un seuil temporel différent, et le volume d'eau consommé est typiquement inférieur à un seuil volumique différent, selon que le système qui tire l'eau est une douche 20 ou un bain 21.

Ainsi, dans le cas d'une douche, on a typiquement :

- Plage de débit : 10L/minute à 16L/minute ;
- Seuil temporel : 5 minutes ;
- Seuil volumique de consommation : 80L.

Dans le cas d'un bain, on a typiquement :

- Plage de débit : 18L/minute à 24L/minute ;
- Seuil temporel : 15 minutes ;
- Seuil volumique de consommation : 200L.

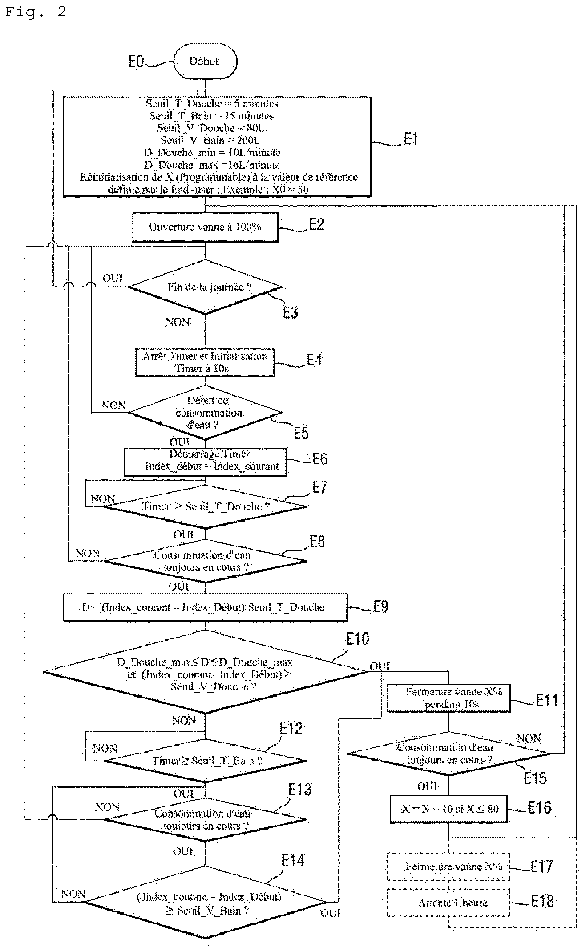

On décrit maintenant plus précisément, en référence à la figure 2, un exemple de mise en œuvre du procédé de surveillance.

Le procédé débute à l'étape E0.

Les variables suivantes sont initialisées par l'unité de traitement 7 (étape E1) :

- Seuil_T_Douche = 5 minutes ;
- Seuil_T_Bain = 15 minutes ;
- Seuil_V_Douche = 80L ;
- Seuil_V_Bain = 200L ;
- D_Douche_min = 10L/minute ;
- D_Douche_max = 16L/minute ;

Le niveau de fermeture prédéterminé X est initialisé à une valeur de référence (en %).

La valeur de référence est ici égale au seuil paramétrable X0, qui est ici programmé (par exemple) par l'utilisateur.

On a par exemple : X0 = 50 (% de fermeture).

Puis, l'unité de traitement 7 ouvre la vanne 15 entièrement, à 100% (étape E2).

L'unité de traitement 7 vérifie alors si le temps présent correspond à la fin de la journée (étape E3). Si c'est le cas, le procédé repasse à l'étape E1.

Sinon, le procédé passe à l'étape E4. Le chronomètre est arrêté puis initialisé. L'unité de traitement 7 attend un temps d'attente, de 10s par exemple, puis tente de détecter le début d'un tirage d'eau (c'est-à-dire qu'un système de l'installation commence à consommer de l'eau) : étape E5.

On considère qu'un tirage d'eau a débuté si la consommation d'eau est supérieure ou égale à un seuil prédéfini (par exemple 1L) pendant une durée prédéfinie (par exemple 10s).

Tant que le début d'un tirage d'eau n'est pas détecté, le procédé repasse à l'étape E3.

Lorsque le début d'un tirage d'eau est détecté, l'unité de traitement 7 démarre le chronomètre (étape E6).

L'unité de traitement 7 confère à la variable Index_début la valeur de la variable Index_courant. La variable Index_courant est l'index de consommation mesuré au temps présent par le dispositif de mesure 6 (c'est-à-dire le volume d'eau mesuré cumulé au temps présent).

L'unité de traitement 7 vérifie que la durée mesurée par le chronomètre est supérieure (ici supérieure ou égale) à un premier seuil temporel, qui est égal à Seuil_T_Douche (étape E7). Tant que ce n'est pas le cas, le procédé reboucle sur l'étape E7.

Lorsque c'est le cas, l'unité de traitement 7 vérifie si le tirage d'eau est toujours en cours (étape E8). Si ce n'est pas le cas, le procédé repasse à l'étape E3.

Si c'est le cas, et donc si le tirage d'eau est toujours en cours alors que la durée mesurée par le chronomètre est supérieure ou égale au premier seuil temporel, l'unité de traitement 7 évalue un premier volume d'eau consommé et un premier débit d'eau moyen pendant le premier seuil temporel (étape E9).

Ici, l'unité de traitement 7 évalue le premier volume d'eau consommé en utilisant la formule :

$$Index\_courant - Index\_Début,$$

et le premier débit d'eau moyen D en utilisant la formule :

$$D = (Index\_courant - Index\_Début)/Seuil\_T\_Douche.$$

L'unité de traitement 7 effectue alors une première étape de détection consistant à vérifier si le premier débit d'eau moyen appartient à un premier intervalle de débit prédéterminé et si le premier volume d'eau consommé est supérieur (ici supérieur ou égal) à un premier seuil de volume prédéterminé :

D_Douche_min $\leq$ D $\leq$ D_Douche_max et
(Index_courant - Index_Début) $\geq$ Seuil_V_Douche (étape E10).

Si ces conditions sont toutes deux remplies, l'unité de traitement 7 détecte une phase de fonctionnement et une surconsommation à venir d'un premier système prédéterminé, qui est la douche 20. Le procédé passe à l'étape E11.

A l'étape E10, si les conditions ne sont pas toutes deux remplies, l'unité de traitement 7 vérifie que la durée mesurée par le chronomètre est supérieure (ici supérieure ou égale) à un deuxième seuil temporel, qui est égal à Seuil_T_Bain (étape E12). Tant que ce n'est pas le cas, le procédé reboucle sur l'étape E12.

Lorsque c'est le cas, l'unité de traitement 7 vérifie si le tirage d'eau est toujours en cours (étape E13). Si ce n'est pas le cas, le procédé repasse à l'étape E3.

Si le tirage d'eau est toujours en cours, l'unité de traitement 7 effectue une deuxième étape de détection consistant à vérifier si le deuxième débit d'eau moyen appartient à un deuxième intervalle de débit prédéterminé et/ou si le deuxième volume d'eau consommé est supérieur (ici supérieur ou égal) à un deuxième seuil de volume prédéterminé supérieur au premier seuil de volume prédéterminé (étape E14).

Ici, l'unité de traitement 7 vérifie uniquement la condition portant sur le deuxième volume d'eau consommé : (Index_courant - Index_Début) $\geq$ Seuil_V_Bain (étape E14).

Si cette condition est remplie, l'unité de traitement 7 détecte une phase de fonctionnement et une surconsommation à venir d'un deuxième système prédéterminé, qui est le bain 21. Le procédé passe alors à l'étape E11.

A l'étape E14, si la condition n'est pas remplie, le procédé repasse à l'étape E13.

A l'étape E11, le débit d'eau courant est donc limité : la vanne 15 est fermée partiellement, pendant une durée prédéterminée, d'un niveau de fermeture prédéterminé, qui est tout d'abord égal à X0% (c'est-à-dire au seuil paramétrable en %).

La durée prédéterminée est par exemple égale à 10s.

Cette limitation du débit d'eau courant permet d'avertir l'utilisateur de sa surconsommation.

Puis, suite à la fermeture au moins partielle de la vanne 15, l'unité de traitement 7 vérifie si le tirage d'eau est toujours en cours (étape E15). Si c'est le cas, l'unité de traitement 7 augmente le niveau de fermeture prédéterminé d'une valeur prédéterminée, ici égale à 10% (étape E16) :

$$X = X + 10 \text{ si } X \leq 80\%.$$

On constate donc que l'unité de traitement 7 est susceptible d'augmenter le niveau de fermeture prédéterminé jusqu'à un plafond maximum, égal par exemple à 80%.

Le procédé repasse alors à l'étape E2. Cela signifie que, jusqu'à la fin de la journée, et la réinitialisation du niveau de fermeture prédéterminé, lorsqu'une nouvelle surconsommation est détectée, le niveau de fermeture de la vanne 15 sera plus important (de 10%) pour avertir l'utilisateur de manière plus efficace.

Optionnellement, on peut prévoir, suite à l'étape E16, de maintenir la vanne partiellement fermée à X% (étape E17), et d'attendre dans cette situation pendant une durée supplémentaire (étape E18). Cette durée supplémentaire est plus importante que la durée prédéterminée, et est par exemple égale à 1 heure. Suite à la durée supplémentaire, le procédé repasse alors à l'étape E2 et à nouveau, X garde sa valeur en cours jusqu'à la fin de la journée.

On note que la valeur du seuil paramétrable X0, qui est le niveau de fermeture « initial » de la vanne 15, est décidée ici par l'utilisateur, qui peut modifier cette valeur à sa guise. L'utilisateur peut conférer à X0 une valeur permissive, c'est-à-dire relativement faible (on a choisi ici X0 = 50%), pour éviter, en cas de réduction du débit d'eau, de générer des alarmes au niveau du lave-linge ou du lave-vaisselle typiquement, en cas de débit d'eau insuffisant. En variante, X0 peut être réglé par le distributeur d'eau ou le gestionnaire du réseau (par exemple sur la base des courbes de charge récupérées périodiquement) .

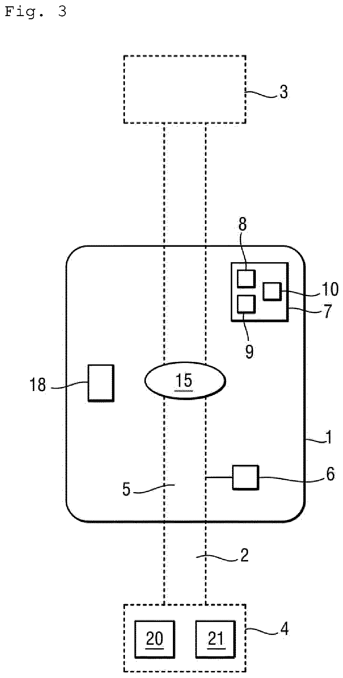

Dans un deuxième mode de réalisation, en référence à la figure 3, la vanne 15 n'est cette fois pas située dans un boîtier de coupure à l'extérieur du compteur 1, mais est intégrée dans le compteur 1. Le procédé de surveillance est mis en œuvre de la même manière si ce n'est que, dans cette configuration, le compteur 1 n'a pas besoin de communiquer avec un équipement externe : l'unité de traitement 7 pilote directement la vanne 15.

Bien entendu, l'invention n'est pas limitée aux modes de réalisation décrits mais englobe toute variante entrant dans le champ de l'invention tel que défini par les revendications.

De nombreuses variantes du procédé de la figure 2 sont bien sûr envisageables. Par exemple, à l'étape E14, les conditions vérifiées pourraient porter sur le débit moyen et le volume consommé - et non uniquement sur le volume consommé.

Les signatures des systèmes prédéterminés ne sont pas définies forcément par la durée de tirage d'eau, le débit d'eau moyen et le volume d'eau consommé, mais peuvent être définies par un ou deux de ces paramètres prédéfinis seulement.

Les paramètres prédéfinis peuvent d'ailleurs être différents de ceux décrits ici, et pourraient par exemple comprendre une pente de consommation ou un débit courant (et non moyen).

Les systèmes prédéterminés de l'installation, dont la consommation est surveillée, ne sont pas nécessairement une douche et un bain. Il pourrait s'agir d'autres systèmes : système d'arrosage du jardin, de remplissage de piscine, etc.

**Revendications**

1.  Compteur d'eau (1) comprenant :

    - un dispositif de mesure (6) agencé pour produire des mesures d'une consommation d'eau d'une installation (4) ;
    - une vanne (15), ou des premiers moyens de communication (12) avec un boîtier de coupure (11) situé à l'extérieur du compteur (1) et intégrant une vanne (15) ;
- une unité de traitement (7) agencée pour :

∘ analyser les mesures de la consommation d'eau pour produire des mesures de paramètres prédéfinis relatifs à la consommation d'eau, et détecter, à partir desdites mesures des paramètres prédéfinis, des phases de fonctionnement d'au moins un système prédéterminé (20, 21) de l'installation ;
**caractérisé en ce que**
∘ pour chaque système prédéterminé, au cours de chaque phase de fonctionnement dudit système prédéterminé, si la consommation d'eau dépasse un seuil prédéterminé associé audit système prédéterminé, fermer au moins partiellement la vanne (15) pendant une durée prédéterminée pour limiter un débit d'eau courant fourni à l'installation (4),

la fermeture au moins partielle de la vanne (15) consistant à fermer la vanne d'un niveau de fermeture prédéterminé qui est fonction d'un seuil paramétrable (X0), le compteur d'eau comprenant des deuxièmes moyens de communication (18) permettant de paramétrer le seuil paramétrable.

2. Compteur d'eau selon la revendication 1, dans lequel les paramètres prédéfinis comprennent une durée de tirage d'eau et/ou un débit d'eau moyen et/ou un volume d'eau consommé.

3. Compteur d'eau selon l'une des revendications précédentes, dans lequel les au moins un système prédéterminé comprennent une douche (20) et un bain (21).

4. Compteur d'eau selon l'une des revendications précédentes, dans lequel la vanne (15) est une vanne à bille.

5. Procédé de surveillance, mis en œuvre dans l'unité de traitement (7) d'un compteur d'eau (1) selon l'une des revendications précédentes, et comprenant les étapes de :

- analyser les mesures de la consommation d'eau pour produire des mesures de paramètres prédéfinis relatifs à la consommation d'eau, et détecter, à partir desdites mesures des paramètres prédéfinis, des phases de fonctionnement d'au moins un système prédéterminé (20, 21) de l'installation ;
- pour chaque système prédéterminé, au cours de chaque phase de fonctionnement dudit système prédéterminé, si la consommation d'eau dépasse un seuil prédéterminé associé audit système prédéterminé, fermer au moins partiellement la vanne (15) pendant une durée prédéterminée pour limiter un débit d'eau courant fourni à l'installation.

6. Procédé de surveillance selon la revendication 5, dans lequel les paramètres prédéfinis comprennent une durée de tirage d'eau et/ou un débit d'eau moyen et/ou un volume d'eau consommé.

7. Procédé de surveillance selon la revendication 6, comprenant les étapes de :

- détecter un début d'un tirage d'eau ;
- démarrer un chronomètre ;
- si le tirage d'eau est toujours en cours alors qu'une durée mesurée par le chronomètre est supérieure à un premier seuil temporel :

∘ évaluer un premier débit d'eau moyen et un premier volume d'eau consommé pendant le premier seuil temporel ;
∘ effectuer une première étape de détection consistant à vérifier si le premier débit d'eau moyen appartient à un premier intervalle de débit prédéterminé et si le premier volume d'eau consommé est supérieur à un premier seuil de volume prédéterminé et, si ces conditions sont toutes deux remplies, détecter une phase de fonctionnement et une surconsommation à venir d'un premier système prédéterminé, puis fermer au moins partiellement la vanne (15) pendant la période prédéterminée.

8. Procédé de surveillance selon la revendication 7, le premier système prédéterminé étant une douche (20).

9. Procédé de surveillance selon l'une des revendications 7 ou 8, dans lequel, si les conditions de la première étape de détection ne sont pas toutes remplies, le procédé comprend les étapes de :

- vérifier si le tirage d'eau est toujours en cours alors que la durée mesurée par le chronomètre est supérieure à un deuxième seuil temporel ;
- si c'est le cas :

◦ évaluer un deuxième débit d'eau moyen et/ou un deuxième volume d'eau consommé pendant le deuxième seuil temporel ;
◦ effectuer une deuxième étape de détection consistant à vérifier si le deuxième débit d'eau moyen appartient à un deuxième intervalle de débit prédéterminé et/ou si le deuxième volume d'eau consommé est supérieur à un deuxième seuil de volume prédéterminé supérieur au premier seuil de volume prédéterminé et, si cette ou ces conditions sont toutes remplies, détecter une phase de fonctionnement et une surconsommation à venir d'un deuxième système prédéterminé, puis fermer au moins partiellement la vanne (15) pendant la période prédéterminée.

10. Procédé de surveillance selon la revendication 9, le deuxième système prédéterminé étant un bain (21).

11. Procédé de surveillance selon l'une des revendications 7 à 10, dans lequel la fermeture au moins partielle de la vanne (15) consiste à fermer la vanne d'un niveau de fermeture prédéterminé, le procédé de surveillance comprenant en outre l'étape, suite à la durée prédéterminée pendant laquelle la vanne est au moins partiellement fermée, de vérifier si le tirage d'eau est toujours en cours et, si c'est le cas, d'augmenter le niveau de fermeture prédéterminé d'une valeur prédéterminée.

12. Procédé de surveillance selon la revendication 11, dans lequel le niveau de fermeture prédéterminé est réinitialisé à la fin de chaque journée.

13. Procédé de surveillance selon l'une des revendications 7 à 12, comprenant en outre l'étape, suite à la durée prédéterminée pendant laquelle la vanne est au moins partiellement fermée, de vérifier si le tirage d'eau est toujours en cours et, si c'est le cas, de maintenir la vanne fermée pendant une durée supplémentaire supérieure à la durée prédéterminée.

14. Programme d'ordinateur comprenant des instructions qui conduisent l'unité de traitement (7) du compteur (1) selon l'une des revendications 1 à 4 à exécuter les étapes du procédé de surveillance selon l'une des revendications 5 à 13.

15. Support d'enregistrement lisible par ordinateur, sur lequel est enregistré le programme d'ordinateur selon la revendication 14.

**Patentansprüche**

1. Wasserzähler (1) umfassend:

- eine Messvorrichtung (6), die derart beschaffen ist, dass sie Messdaten zu einem Wasserverbrauch einer Anlage (4) erzeugt;
- ein Ventil (15) bzw. erste Kommunikationsmittel (12) mit einem außerhalb des Zählers (1) befindlichen Abschaltkasten (11), in dem ein Ventil (15) integriert ist;
- eine Verarbeitungseinheit (7), die derart eingerichtet ist, dass sie:

◦ die Messdaten des Wasserverbrauchs analysiert, um Messdaten für vorgegebene wasserverbrauchsspezifische Parameter zu erzeugen, und dass sie aus den Messdaten für diese vorgegebenen Parameter Betriebsphasen von zumindest einem vorbestimmten System (20, 21) der Anlage erkennt;

**dadurch gekennzeichnet, dass** für jedes vorbestimmte System während jeder Betriebsphase des vorbestimmten Systems gilt, dass wenn der Wasserverbrauch einen dem vorbestimmten System zugeordneten, vorbestimmten Schwellenwert übersteigt, das Ventil (15) für eine vorbestimmte Zeitdauer zumindest teilweise geschlossen wird, um einen der Anlage (4) zugeführten aktuellen Wasserdurchfluss zu begrenzen, wobei das zumindest teilweise Schließen des Ventils (15) darin besteht, dass das Ventil um ein vorbestimmtes Schließniveau geschlossen wird, welches von einem parametrierbaren Schwellenwert (XO) abhängig ist, wobei der Wasserzähler zweite Kommunikationsmittel (18) zur Parametrierung des parametrierbaren Schwellenwerts umfasst.

2. Wasserzähler nach Anspruch 1, wobei die vorgegebenen Parameter eine Wasserentnahmedauer und/oder einen mittleren Wasserdurchfluss und/oder ein verbrauchtes Wasservolumen umfassen.

3. Wasserzähler nach einem der vorhergehenden Ansprüche, wobei das zumindest eine vorbestimmte System eine Dusche (20) bzw. eine Badewanne (21) umfasst.

4. Wasserzähler nach einem der vorhergehenden Ansprüche, wobei es sich bei dem Ventil (15) um ein Kugelventil handelt.

5. Überwachungsverfahren, welches in der Verarbeitungseinheit (7) eines Wasserzählers (1) nach einem der vorhergehenden Ansprüche ausgeführt wird und die Schritte umfasst, dass:

   - die Messdaten des Wasserverbrauchs analysiert werden, um Messdaten für vorgegebene wasserverbrauchsspezifische Parameter zu erzeugen, und dass aus den Messdaten der vorgegebenen Parameter Betriebsphasen von zumindest einem vorbestimmten System (20, 21) der Anlage erkannt werden;
   - für jedes vorbestimmte System während jeder Betriebsphase des vorbestimmten Systems gilt, dass wenn der Wasserverbrauch einen dem vorbestimmten System zugeordneten, vorbestimmten Schwellenwert übersteigt, das Ventil (15) für eine vorbestimmte Zeitdauer zumindest teilweise geschlossen wird, um einen der Anlage zugeführten aktuellen Wasserdurchfluss zu begrenzen.

6. Überwachungsverfahren nach Anspruch 5, wobei die vorgegebenen Parameter eine Wasserentnahmedauer und/oder einen mittleren Wasserdurchfluss und/oder ein verbrauchtes Wasservolumen umfassen.

7. Überwachungsverfahren nach Anspruch 6, die Schritte umfassend, dass:

   - ein Beginnzeitpunkt einer Wasserentnahme erkannt wird;
   - ein Zeitmesser gestartet wird;
   - wenn die Wasserentnahme immer noch im Gange ist, obwohl eine von dem Zeitmesser gemessene Zeitdauer über einem ersten Zeitschwellenwert liegt:

      ◦ ein erster mittlerer Wasserdurchfluss und ein erstes verbrauchtes Wasservolumen, die während des ersten Zeitschwellenwerts erfolgen, ausgewertet wird;
      ◦ ein erster Erkennungsschritt durchgeführt wird, bei dem überprüft wird, ob der erste mittlere Wasserdurchfluss zu einem ersten vorbestimmten Durchflussintervall gehört und ob das erste verbrauchte Wasservolumen über einem ersten vorbestimmten Volumenschwellenwert liegt, und dass, wenn diese beiden Bedingungen erfüllt sind, eine Betriebsphase und ein Überverbrauch, die auf ein erstes vorbestimmtes System zurückzuführen sind, erkannt werden, und dass anschließend das Ventil (15) für die vorbestimmte Zeitdauer zumindest teilweise geschlossen wird.

8. Überwachungsverfahren nach Anspruch 7, wobei es sich bei dem ersten vorbestimmten System um eine Dusche (20) handelt.

9. Überwachungsverfahren nach einem der Ansprüche 7 oder 8, wobei, wenn die Bedingungen des ersten Erfassungsschrittes nicht alle erfüllt sind, das Verfahren die Schritte umfasst, dass:

   - überprüft wird, ob die Wasserentnahme immer noch im Gange ist, obwohl die von dem Zeitmesser gemessene Zeitdauer über einem zweiten Zeitschwellenwert liegt;
   - wenn dies der Fall ist:

      ◦ ein zweiter mittlerer Wasserdurchfluss und/oder ein zweites verbrauchtes Wasservolumen, die während des zweiten Zeitschwellenwerts erfolgen, ausgewertet werden;
      ◦ ein zweiter Erkennungsschritt durchgeführt wird, bei dem überprüft wird, ob der zweite mittlere Wasserdurchfluss zu einem zweiten vorbestimmten Durchflussintervall gehört und/oder ob das zweite verbrauchte Wasservolumen über einem zweiten vorbestimmten Volumenschwellenwert liegt, der größer als der erste vorbestimmte Volumenschwellenwert ist, und dass, wenn eine oder alle beide dieser Bedingungen erfüllt sind, eine Betriebsphase und ein Überverbrauch, die auf ein zweites vorbestimmtes System zurückzuführen sind, erkannt werden, und dass anschließend das Ventil (15) für die vorbestimmte Zeitdauer zumindest teilweise geschlossen wird.

10. Überwachungsverfahren nach Anspruch 9, wobei es sich bei dem zweiten vorbestimmten System um eine Badewanne (21) handelt.

11. Überwachungsverfahren nach einem der Ansprüche 7 bis 10, wobei das zumindest teilweise Schließen des Ventils (15) darin besteht, dass das Ventil um ein vorbestimmtes Schließniveau geschlossen wird, wobei das Überwachungsverfahren ferner den Schritt umfasst, dass im Anschluss an die vorbestimmte Zeitdauer, während derer das Ventil zumindest teilweise geschlossen ist, überprüft wird, ob die Wasserentnahme immer noch im Gange ist, und dass, wenn dies der Fall ist, das vorbestimmte Schließniveau um einen vorbestimmten Wert erhöht wird.

12. Überwachungsverfahren nach Anspruch 11, wobei das vorbestimmte Schließniveau am Ende eines jeden Tages auf den Ausgangswert zurückgesetzt wird.

13. Überwachungsverfahren nach einem der Ansprüche 7 bis 12, ferner den Schritt umfassend, dass im Anschluss an die vorbestimmte Zeitdauer, während derer das Ventil zumindest teilweise geschlossen ist, überprüft wird, ob die Wasserentnahme immer noch im Gange ist, und dass, wenn dies der Fall ist, das Ventil für eine zusätzliche Zeitdauer, die größer als die vorbestimmte Zeitdauer ist, geschlossen gehalten wird.

14. Computerprogramm, das Befehle umfasst, welche die Verarbeitungseinheit (7) des Zählers (1) nach einem der Ansprüche 1 bis 4 dazu veranlassen, die Schritte des Überwachungsverfahrens nach einem der Ansprüche 5 bis 13 auszuführen.

15. Computerlesbares Speichermedium, auf welchem das Computerprogramm nach Anspruch 14 abgespeichert ist.

## Claims

1. Water meter (1) comprising:

   - a measuring device (6) arranged to produce measurements of a water consumption of an installation (4);
   - a valve (15), or first means (12) for communicating with a cutoff box (11) located outside of the meter and integrating a valve;
   - · a processing unit (7) arranged:

     ∘ analysing the measurements of the water consumption to produce predefined parameter measurements relating to water consumption, and detecting, from said predefined parameter measurements, operating phases of at least one predetermined system of the installation;
     **characterized in that**
     ∘ for each predetermined system, during each phase of operation of said predetermined system, if the water consumption exceeds a predetermined threshold associated with said predetermined system, at least partially close the valve for a predetermined time to limit a current water flow rate supplied to the installation (4),

   wherein the at least partial closing of the valve (15) consists in closing the valve by a predetermined closing level which is a function of a parameterizable threshold (X0), the water meter comprising second communication means (18) for parameterizing the parameterizable threshold.

2. Water meter according to claim 1, wherein the predefined parameters comprise a water draw time and/or an average water flow rate and/or a volume of water consumed.

3. Water meter according to any one of the preceding claims, wherein the at least one predetermined system comprises a shower (20) and a bath 21).

4. Water meter according to any one of the preceding claims, wherein the valve (15) is a ball valve.

5. Monitoring method implemented in the processing unit (7) of a water meter (1) according to any one of the preceding claims, and comprising the steps of:

   - analysing the measurements of the water consumption to produce predefined parameter measurements relating to water consumption, and detecting, from said predefined parameter measurements, operating phases of at least one predetermined system of the installation;
- for each predetermined system, during each phase of operation of said predetermined system, if the water consumption exceeds a predetermined threshold associated with said predetermined system, at least partially close the valve for a predetermined time to limit a current water flow rate supplied to the installation.

6. Monitoring method according to claim 5, wherein the predefined parameters comprise a water draw time and/or an average water flow rate and/or a volume of water consumed.

7. Monitoring method according to claim 6, comprising the steps of:

- detecting a start of a water draw;
- start a timer;
- if the water draw is still in progress while a time measured by the timer is greater than a first time threshold:

    ∘ evaluating a first average water flow rate and a first volume of water consumed during the first time threshold;
    ∘ performing a first detection step consisting of checking whether the first average water flow rate belongs to a first predetermined flow rate interval and whether the first volume of water consumed is greater than a first predetermined volume threshold and, if these conditions are both met, detecting an operating phase and an upcoming overconsumption of a first predetermined system, then at least partially closing the valve (15) during the predetermined period.

8. Monitoring method according to claim 7, wherein the first predetermined system is a shower (20).

9. Monitoring method according to claim 7 or 8, wherein, if the conditions of the first detection step are not all met, the method comprises the steps of:

- checking whether the water draw is still in progress while a time measured by the timer is greater than a second time threshold;
- if this is the case:

    ∘ evaluating a second average water flow rate and/or a second volume of water consumed during the second time threshold;
    ∘ performing a second detection step consisting of checking whether the second average water flow belongs to a second predetermined flow interval and/or whether the second volume of water consumed is greater than a second predetermined volume threshold greater than the first predetermined volume threshold and, if these conditions are all met, detecting an operating phase and an upcoming overconsumption of a second predetermined system, then at least partially closing the valve (15) during the predetermined period.

10. Monitoring method according to claim 9, the second predetermined system being a bath (21).

11. Monitoring method according to any one of claims 7 to 10, wherein the at least partial closure of the valve (15) consists in closing the valve by a predetermined closure level, the monitoring method further comprising the step, following the predetermined time during which the valve is at least partially closed, of checking whether the water draw is still in progress and, if so, of increasing the predetermined closure level by a predetermined value.

12. Monitoring method according to claim 11, wherein the predetermined closing level is reset at the end of each day.

13. Monitoring method according to any one of claims 7 to 12, further comprising the step, following the predetermined time during which the valve is at least partially closed, of checking whether the water draw is still in progress and, if so, of keeping the valve closed for an additional time greater than the predetermined time.

14. Computer program comprising instructions which leads to the processing unit (7) of the water meter (1) according to one of claims 1 to 4, executing the steps of the monitoring method according to one of claims 5 to 13.

15. Storage media which can be read by a computer, on which the computer program according to claim 14 is stored.

Fig. 1

Fig. 2

E0 — Début

E1
Seuil_T_Douche = 5 minutes
Seuil_T_Bain = 15 minutes
Seuil_V_Douche = 80L
Seuil_V_Bain = 200L
D_Douche_min = 10L/minute
D_Douche_max =16L/minute
Réinitialisation de X (Programmable) à la valeur de référence
définie par le End-user : Exemple : X0 = 50

E2 — Ouverture vanne à 100%

E3 — Fin de la journée ? — OUI / NON

E4 — Arrêt Timer et Initialisation Timer à 10s

E5 — Début de consommation d'eau ? — NON / OUI

E6 — Démarrage Timer Index_début = Index_courant

E7 — Timer ≥ Seuil_T_Douche ? — NON / OUI

E8 — Consommation d'eau toujours en cours ? — NON / OUI

E9 — D = (Index_courant – Index_Début)/Seuil_T_Douche

E10 — D_Douche_min ≤ D ≤ D_Douche_max et (Index_courant – Index_Début) ≥ Seuil_V_Douche ? — OUI / NON

E11 — Fermeture vanne X% pendant 10s

E12 — Timer ≥ Seuil_T_Bain ? — NON / OUI

E13 — Consommation d'eau toujours en cours ? — NON / OUI

E14 — (Index_courant – Index_Début) ≥ Seuil_V_Bain ? — NON / OUI

E15 — Consommation d'eau toujours en cours ? — NON / OUI

E16 — X = X + 10 si X ≤ 80

E17 — Fermeture vanne X%

E18 — Attente 1 heure

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2020011721 A1

- US 2016041565 A1